# EUROPEAN PATENT SPECIFICATION

(11) **EP 4 130 720 B1**
(45) Date of publication and mention of the grant of the patent: **14.08.2024**
(21) Application number: 21190174.9
(22) Date of filing: 06.08.2021
(51) Int. Cl.: G01N 21/88

(54) **OBJECT ILLUMINATION**
OBJEKTBELEUCHTUNG
ÉCLAIRAGE D'OBJET

(43) Date of publication of application: 08.02.2023
(73) Proprietor: Technische Hochschule Ingolstadt, 85049 Ingolstadt (DE)
(72) Inventor: Bilal, Mühenad, 81249 Munich (DE); Mayer, Christian, 86529 Schrobenhausen (DE)
(74) Representative: Koplin, Moritz

(56) References cited:
- CN-A- 105 181 135
- CN-U- 206 114 547
- JP-A- 2006 250 584

## Description

### FIELD

The present disclosure relates to an apparatus for illuminating an object and a method of illuminating an object which is to be inspected. More particularly, the present disclosure relates to homogeneously illuminating an object (such as a cutting tool) within a radially symmetric enclosure to facilitate visual inspection of the object.

### BACKGROUND

CN 105 181135 A discloses an illumination system which may be applied to textile hyperspectral image acquisition and digital color measurement. The system comprises an integral sphere, wherein the inner wall surface of the integral sphere is coated with a diffuse reflectance coating with high reflectance. The top part of the integral sphere is symmetrically provided with two light source mounting holes with inner threads. Two inner side surface is provided with baffles which extend below the light source mounting holes. The integral sphere is also internally provided with a sample drawer.

JP 2006 250584 A discloses a diffusion reflection plate which is formed into a cylindrical shape and is erected on the peripheral edge of a bottom plate. A light source is attached to the center of the upper surface of the bottom plate and a support member which is constituted of rod bodies and a support, is attached to the central part of the bottom plate around the light source as a center. A sample stage comprising a circular plate which is made of a metal is placed on the support.

CN 206 114 547 U provides a source of illumination for detecting high reflection surface defects. The setup including an annular illumination chamber and a dome illumination chamber, wherein the dome illumination chamber is set up directly over the annular illumination chamber. The chamber top in the dome illumination chamber is equipped with a LED light source.

Depending on the object's surface and the lighting conditions, the visual inspection of objects may be considerably impaired by specular reflection on/by the object's surface.

### SUMMARY

The present invention is directed at an apparatus for illuminating an object according to claim 1 and a method of illuminating an object which is to be inspected according to claim 10.

The apparatus comprises an enclosure which is configured to accommodate the object, the enclosure comprising a dome portion and enclosing a space which comprises a cylindrical portion, a truncated conical portion, and/or a hemispherical portion, or is radially symmetric, an emitter which is contained within the enclosure and configured to emit electromagnetic radiation, wherein the emitter comprises multiple inwardly facing active surfaces arranged along a ring, and a diffusor, the diffusor having a concave portion facing the dome portion, the concave portion diffusing electromagnetic radiation incident upon the concave portion towards an inner surface region of the enclosure, the inner surface region being configured to diffuse the electromagnetic radiation onto the object, wherein the diffusor is a ring-shaped radially symmetric diffusor, wherein a cross-section of the ring-shaped radially symmetric diffusor through an axis of radial symmetry has two U-shaped portions which are mirror symmetric to said axis.

In this regard, the term "enclosure", as used throughout the description and the claims, particularly refers to a structure which separates an interior of the enclosure from an exterior of the enclosure. The structure comprises portions that reflect the electromagnetic radiation but may also comprise an aperture or transparent region which allows electromagnetic radiation to pass from the interior to the exterior. Furthermore, the structure may comprise a receptacle for the object or an opening through which the object or at least a part of it can be positioned within the structure. For example, the structure may comprise a removable part on which the object can be mounted and said removable part may be attachable to another part of the structure to position the object or at least a part of it within the enclosure. The shape of the enclosure may be adapted to the shape of the object. For example, the enclosure may have a cylindrical portion if the object has a cylindrical shape, and the enclosure may have a hemispherical or spherical portion if the object has a hemispherical or spherical shape, respectively.

Moreover, the term "emitter", as used throughout the description and the claims, particularly refers to a semiconductor structure which emits electromagnetic radiation when current flows through the semiconductor structure. For example, the emitter may be (or comprise) a light source such as one or more light emitting diodes (LEDs). The emitter may allow for adapting the intensity of the electromagnetic radiation emitted by the emitter. Furthermore, the term "inner surface region", as used throughout the description and the claims, particularly refers to a region of a surface of the enclosure which delimits the interior of the enclosure, and which faces towards the object when the object is positioned within the structure/enclosure. In addition, the formulation "to diffuse electromagnetic radiation onto the object", as used throughout the description and the claims, particularly refers to causing diffuse reflection, wherein the electromagnetic radiation undergoing the diffuse reflection is incident upon the object (when the object is positioned within the structure/enclosure).

The apparatus may further comprise a sensor which is configured to detect electromagnetic radiation incident upon an active region of the sensor, wherein the active region is arranged such as to face the object and to be exposed to electromagnetic radiation reflected by a surface of the object.

In this regard, the term "sensor", as used throughout the description and the claims, particularly refers to photodetectors such as structures with a semiconducting active surface which converts electromagnetic radiation incident on the semiconducting active surface to an electric signal. Furthermore, the formulation "the active region is arranged such as to face the object", as used throughout the description and the claims, particularly refers to a (substantially) unobstructed line of sight between the active region and the object (when the object is positioned within the structure/enclosure). However, there may be optical elements placed in the path between the active region and the object. For instance, the sensor may be part of a camera which is configured to record an image of the object and the camera may comprise a lens arrangement.

Moreover, the enclosure/structure may comprise an aperture or a transparent region (or window) which is aligned with the active region. The size of the aperture or transparent region (or window) may be small to increase the depth of focus. Moreover, the apparatus may allow for changing the size of the aperture or transparent region (or window). Furthermore, the apparatus may allow for changing the shape of the aperture or transparent region (or window). For example, the aperture or transparent region (or window) may have a rectangular shape or a circular shape (or any other shape, depending on the usage scenario). The sensor may also be placed inside or integrated into the enclosure/structure.

The image may be analyzed for defects. For instance, the apparatus or a computer connected to the sensor may comprise a processor and non-volatile memory storing a set of instructions which when executed by the processor cause the processor to perform edge detection on the image. The set of instructions may also comprise instructions which cause the processor to compare the detected edges with edges of an error-free object of the same type (or making) (i.e., a reference object) and/or to compare the detected edges with theoretically determined edges of an error-free object of the same type (or making). Depending on the result of the comparison, the apparatus may classify the object as acceptable or inacceptable. The analysis may also be used to repair the object or to modify a manufacturing process. For instance, a machine or tool used in the manufacturing process may be replaced or undergo maintenance to avoid (or reduce the severity/likelihood of) future defects during the manufacturing process.

The symmetry facilitates reducing or even avoiding high variations in the luminance distribution across the image caused by specular reflection on/by the object's surface as it causes a more uniform distribution of electromagnetic radiation properties across the interior of the enclosure.

As stated above, the space comprises a cylindrical portion, a truncated conical portion, and/or a hemispherical portion.

Specifically, the space may be adapted to the shape of the object. For example, a shape of the object may be substantially cylindrical (such as the shape of a drill) and a portion of the space which is adapted to the shape of the object (i.e., a portion of the shape which is similar or identical in shape to the shape of the object) may cause an even more uniform distribution of electromagnetic radiation properties across said portion.

As stated above, the enclosure comprises a dome portion.

In this regard, the term "dome portion", as used throughout the description and the claims, particularly refers to a part of the enclosure delimiting a convex and radially symmetric portion of the interior, which has a smoothly curved cross-section (such as a hemispherical portion).

As stated above, the apparatus further comprises a diffusor, wherein the diffusor has a concave portion facing the dome portion and diffuses electromagnetic radiation incident upon the concave portion towards the inner surface region.

In this regard, the term "diffusor", as used throughout the description and the claims, particularly refers to a structure which is configured to diffusely reflect electromagnetic radiation, and which is placed in a path of the electromagnetic radiation to decrease its directivity and avoid specular reflection.

As stated above, the diffusor is radially symmetric. For instance, the shape of the diffusor may be adapted to the shape of the interior to avoid reducing the uniformity of the distribution of electromagnetic radiation properties across the interior.

As stated above, the cross-section of the diffusor through the axis of radial symmetry has two U-shaped portions which are mirror symmetric to said axis.

Electromagnetic radiation may be reflected multiple times at a U-shaped portion, thereby increasing the extent of diffusion caused by the diffusor.

As stated above, the emitter comprises multiple inwardly facing active surfaces arranged along a ring.

In this regard, the term "active surface", as used throughout the description and the claims, particularly refers to a surface of the emitter from which electromagnetic radiation is emitted.

The active surfaces may be arranged facing the concave portion of the diffusor such that electromagnetic radiation emitted by the emitter is directed towards said concave portion which diffusely reflects the electromagnetic radiation.

The apparatus may comprise an actuator which is configured to cause a relative motion between the object and the enclosure.

Causing a relative motion may allow the sensor to image different parts of the object or a portion of the same part with increased accuracy.

The relative motion may be a rotational motion.

For example, the rotational motion may allow imaging several or all sides of the object and/or imaging the object from different perspectives.

The relative motion may be a linear motion.

For example, the linear motion may allow imaging one side of the object and/or imaging different parts of the same side of the object.

The method comprises arranging the object in an enclosure which comprises a dome portion and encloses a space which comprises a cylindrical portion, a truncated conical portion, and/or a hemispherical portion, or is radially symmetric, wherein the object extends along a symmetry axis of a shape of the space enclosed by the enclosure, illuminating the object with light that has been diffusely reflected by an inner surface of the enclosure, and recording an image of the illuminated object, emitting the light onto an outwardly facing concave portion of a diffusor which diffusely reflects the light onto the inner surface, wherein the diffusor blocks direct illumination of the object by a light source which emits the light, wherein the diffusor is a ring-shaped radially symmetric diffusor, wherein a cross-section of the ring-shaped radially symmetric diffusor through an axis of radial symmetry has two U-shaped portions which are mirror symmetric to said axis, wherein the light source comprises multiple light emitting diodes arranged along, and facing, the ring-shaped diffusor, wherein the light emitting diodes are configured to emit light of the same wavelength or different wavelengths, and the method further comprises analyzing the image for defects.

The object may be a cutting tool.

In this regard, the term "cutting tool", as used throughout the description and the claims, particularly refers to objects having one or more sharp edges (such as drills, saws, cutter heads, tool bits, etc.) used in conjunction with a tool or machine which chips away pieces of material from a workpiece when the tool or machine is applied to the workpiece.

Other examples for objects that may be illuminated using the apparatus or the method comprise (but are not limited to) optical components such as mirrors (e.g., collimator mirrors) and optical filters (e.g., gradual filters) and electronic components such as circuit boards, wavers, chips, etc.

As stated above, the light source comprises multiple light emitting diodes arranged along, and facing, the ring-shaped diffusor, wherein the light emitting diodes are configured to emit light of the same wavelength or different wavelengths.

For example, a leg of the U-shaped diffusor may extend from the inner surface of the enclosure inwards and the light emitting diodes may be arranged along the inner surface along a ring where said leg and the inner surface meet.

The inner surface of the enclosure may be coated with barium sulfate.

Notably, the features described throughout the specification with regard to the method may be features of the apparatus and vice versa.

### BRIEF DESCRIPTION OF THE DRAWINGS

The foregoing aspects and many of the attendant advantages will become more readily appreciated as the same become better understood by reference to the following description of embodiments, when taken in conjunction with the accompanying drawings, wherein like reference numerals refer to like parts throughout the various views, unless otherwise specified.
Fig. 1 schematically illustrates an apparatus for inspecting an object according to a first example which is useful for understanding the invention.
Fig. 2 schematically illustrates an apparatus for inspecting an object according to a second example which is useful for understanding the invention.
Fig. 3 schematically illustrates an apparatus for inspecting an object according to a third example which is useful for understanding the invention.
Fig. 4 schematically illustrates an apparatus for inspecting an object according to a fourth example which is useful for understanding the invention.
Fig. 5 schematically illustrates an apparatus for inspecting an object according to a fifth example which is useful for understanding the invention.
Fig. 6 schematically illustrates an apparatus for inspecting an object according to a sixth example which is useful for understanding the invention.
Fig. 7 schematically illustrates an apparatus for inspecting an object according to a first embodiment.
Fig. 8 schematically illustrates an apparatus for inspecting an object according to a second embodiment.
Fig. 9a, Fig. 9b, and Fig. 9c illustrate an apparatus for inspecting an object according to a third embodiment.
Fig. 10 schematically illustrates a system for inspecting an object.
Fig. 11 shows a flow-chart of a method of illuminating a cutting tool which is to be inspected.

Notably, not all drawings are drawn to scale and unless otherwise indicated, they are merely intended to conceptually illustrate the structures and procedures described herein.

### DESCRIPTION OF EXAMPLES AND EMBODIMENTS

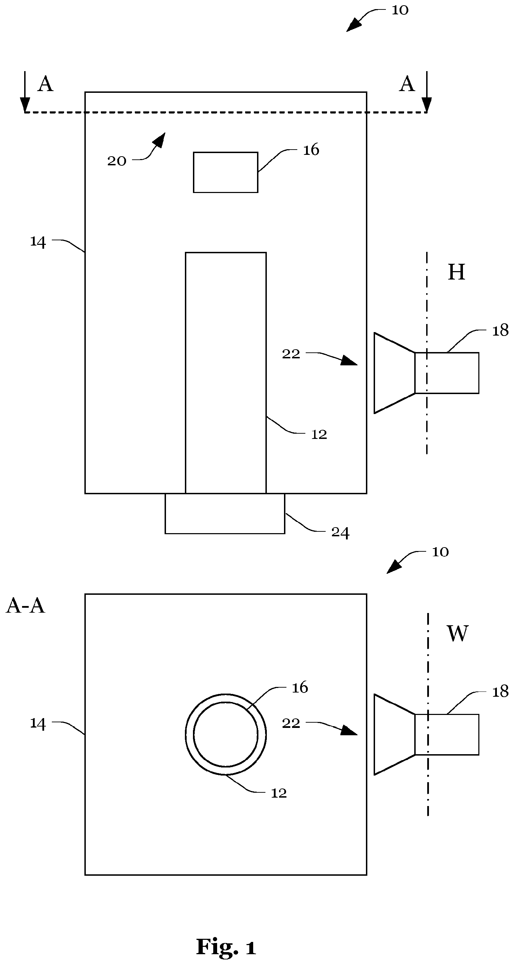

Fig. 1 shows apparatus 10 which comprises enclosure 14, emitter 16, and sensor 18. Emitter 16 is arranged within an interior of enclosure 14 which has a cuboidal shape. During operation, emitter 16 emits electromagnetic radiation onto inner surface region 20 of enclosure 14. Inner surface region 20 is made of, or coated with, a material which causes a diffuse reflection of the incident electromagnetic radiation. For example, enclosure 14 may be coated with barium sulfate. The electromagnetic radiation may also be diffusely reflected at other inner surface regions of enclosure 14. For example, the entire inner surface of enclosure 16 may, like inner surface region 20, be made of, or coated with, a material which causes a diffuse reflection of the electromagnetic radiation incident thereupon.

The electromagnetic radiation may contain, or consist of, wavelengths in the visible spectrum. The electromagnetic radiation may be monochromatic but, depending on emitter 16, may also comprise several wavelengths or wavelengths in a continuous spectrum. Enclosure 14 has an aperture or a transparent portion (which in the case of electromagnetic radiation consisting of wavelengths in the visible spectrum may be a glass window) (not shown) through which electromagnetic radiation reflected by object 12 my travel towards sensor 18. Sensor 18 may convert electromagnetic radiation incident upon active region 22 of sensor 18 to an image.

The image may be used to inspect object 12. Specifically, the image may be used to determine whether object 12 has defects. For example, an edge detection algorithm may be used to find edges of object 12 within the image. Said edges may be compared to edges found within an image of another object (of identical type and/or making) that is free from defects. The found edges may also be compared to edges of an ideal model of object 12. For instance, the model may be used to determine the shape of the edges that are to be found in the image. If a deviation of the shape of the edges (found in the image or determined from the model) from the expected shape is outside a tolerance region, object 12 maybe classified as defective. For instance, object 12 may be part of a machine that is subject to wear and tear. A change in the shape of the edges of object 12 may trigger a decision whether object 12 must be replaced or whether object 12 should be maintained/repaired.

As shown in Fig. 1, apparatus 10 may further comprise actuator 24. Actuator 24 may allow changing the perspective under which the image of object 12 is taken. For example, actuator 24 may turn object 12 (stepwise) to allow sensor 18 to image object 12 from different perspectives. Sensor 18 may be connected to another actuator (not shown) which allows rotating sensor 18 around (two perpendicular) rotational axes H and W and/or changing the position of sensor 18. Actuator 24 (and the other actuator connected to sensor 18) may be synchronized with sensor 18. Hence, images may be taken between times in which actuator 24 changes the orientation of object 12 relative to sensor 18.

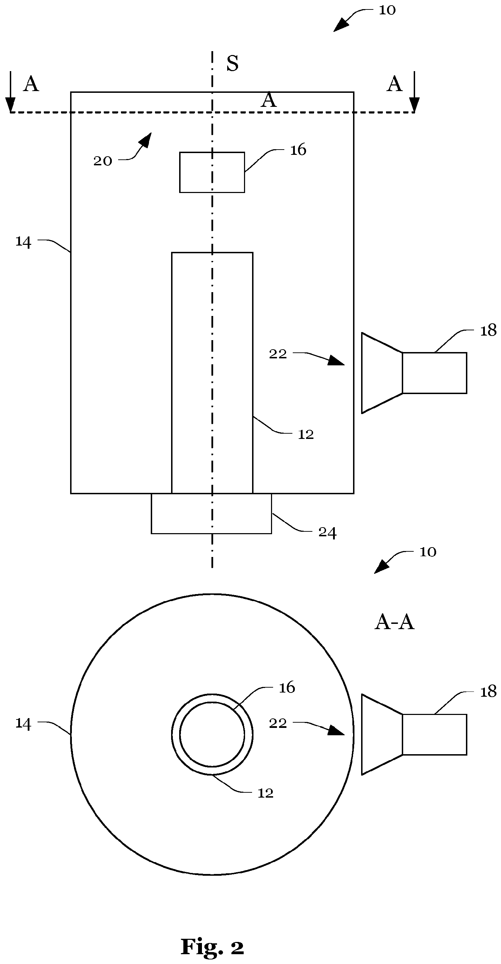

Fig. 2 illustrates a possible modification of apparatus 10 shown in Fig. 1 in which the enclosed space has a cylindrical shape and object 12 extends along the symmetry axis S from a bottom of enclosure 14 towards a top of enclosure 14. Notably, apparatus 10 may also be turned upside down or used in any other orientation than the orientation shown throughout the drawings.

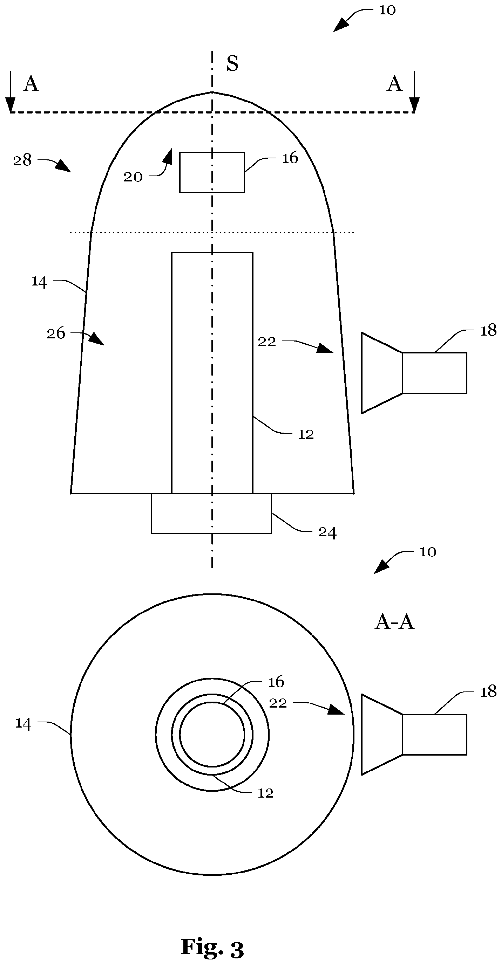

Fig. 3 illustrates another possible modification of apparatus 10 shown in Fig. 1 and Fig. 2 in which the enclosed space comprises truncated conical portion 26 and enclosure 14 comprises dome portion 28. The portion of the enclosed space towards dome portion 28 and above truncated conical portion 26 may have a shape which is radially symmetric to symmetry axis S. Hence, the whole shape of the space enclosed by enclosure 14 may be radially symmetric to symmetry axis S.

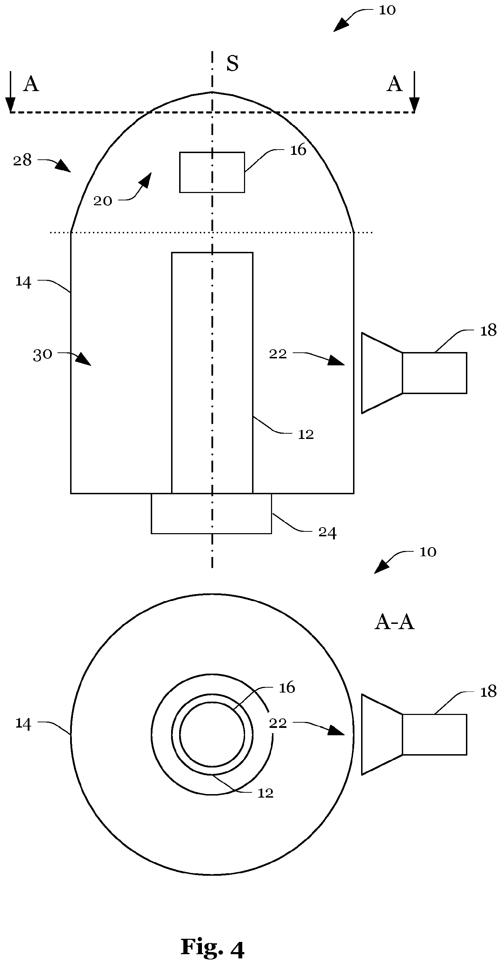

Fig. 4 illustrates another possible modification of apparatus 10 shown in Fig. 1 to Fig. 3 in which the enclosed space comprises cylindrical portion 26 and enclosure 14 comprises dome portion 28. Again, the whole shape of the space enclosed by enclosure 14 may be radially symmetric to symmetry axis S.

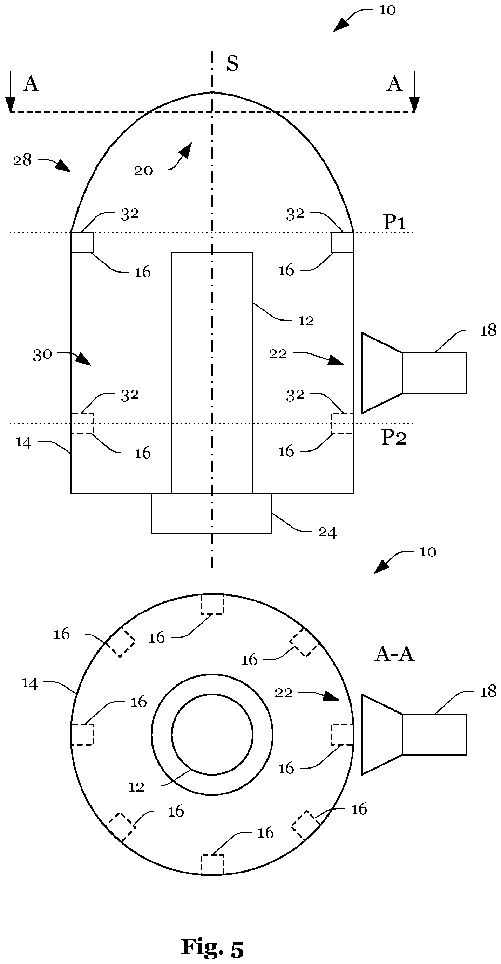

Fig. 5 illustrates another possible modification of apparatus 10 shown in Fig. 1 to Fig. 4 in which emitter 16 comprises multiple active surfaces 32. Active surfaces 32 may be independently controllable and may emit electromagnetic radiation of one or multiple (substantially) distinct wavelengths or electromagnetic radiation having wavelengths within the same or different spectra. For example, active surfaces 32 may be surfaces of light emitting diodes and the wavelengths of the electromagnetic radiation emitted by the light emitting diodes may be in the visible spectrum.

As shown in Fig. 5, emitter(s) 16/active surfaces 32 may be (homogeneously) distributed around symmetry axis S. For example, emitter(s) 16/active surfaces 32 may be arranged radially symmetric to symmetry axis S. Moreover, although Fig. 5 shows a specific number of active surfaces 32, apparatus 10 may also comprise more or less active surfaces 32. Active surfaces 32 may be mounted to the inner surface of enclosure 14. For instance, active surfaces 32 may be mounted to the inner surface of enclosure 14 within the immediate vicinity of plane P1 at which cylindrical portion 26 and dome portion 28 meet. However, active surfaces 32 may not only be horizontally distributed around symmetry axis S but also vertically distributed on the inner surface of enclosure 14. For example, there may be a second plane above or below plane P1 (such as plane P2) at the level of which active surfaces 32 may be distributed around symmetry axis S. In this regard, each of active surfaces 32 may lie in a plane that is perpendicular to a radial line through a center of active surface 32 but the orientation of active surfaces 32 may also differ from this configuration.

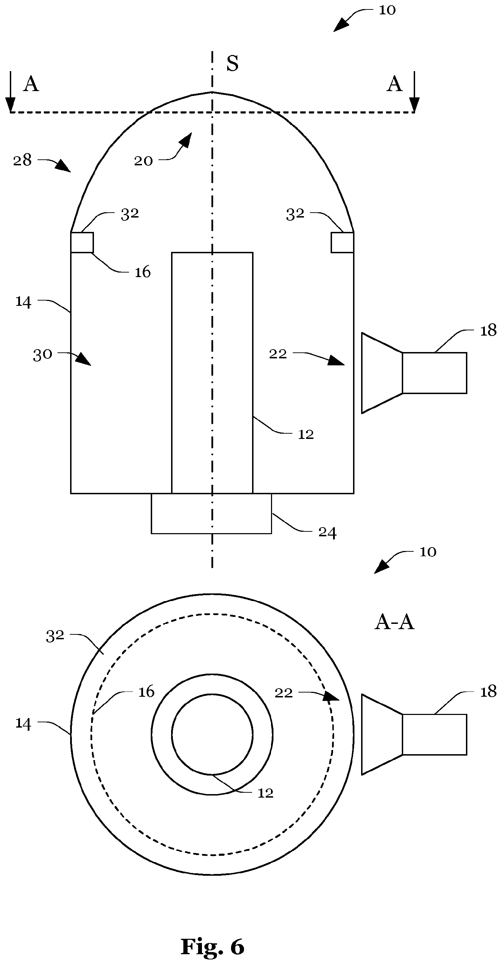

As illustrated in Fig. 6, active surfaces 32 may be homogeneously distributed along, or form, a (circular) ring around symmetry axis S.

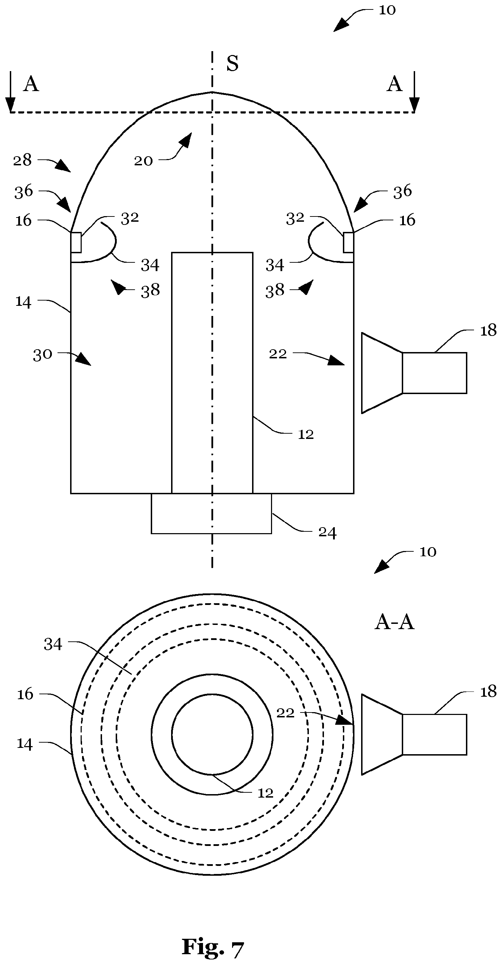

As illustrated in Fig. 7, apparatus 10 may further comprise diffusor 34. Diffusor 34 has concave portion 36 facing dome portion 28. Concave portion 36 (which may be coated with barium sulfate) diffuses incident electromagnetic radiation towards inner surface region 20 of enclosure 14. More specifically, concave portion 36 diffuses incident electromagnetic radiation towards inner surface region 20 of dome portion 28. Electromagnetic radiation emitted by emitter 16/active surface 32 will thus be diffused (for a first time) by diffusor 34 and (for a second time) by inner surface region 20 (and possibly again a third and maybe even a fourth, fifth, etc., time by the inner surface of enclosure 14 and/or by the diffusor 34) before it is finally reflected by the surface of object 12 and detected by sensor 18.

As shown in Fig. 7, diffusor 34 may be radially symmetric to symmetry axis S. The cross-section of diffusor 34 through axis S has two U-shaped portions 38 which are mirror symmetric to axis S. The outwardly facing concave portions 36 of diffusor 34 face the (inwardly facing) active surfaces 32 of emitter 16. In addition, diffusor 34 encloses a space which is open towards dome portion 28 such that electromagnetic radiation escaping said space travels towards inner surface region 20. A gap between (a leg of) diffusor 34 and dome portion 28 may have various shapes and may be provided with a structure having openings that form a pattern (such as a grid) to provide for structured lighting. Moreover, if diffusor 34 is used in conjunction with active surfaces 34 that are (somewhat) farther apart (as illustrated in Fig. 5), diffusor 34 may be comprised of several distinct portions which are distributed across the interior of enclosure 14 in a way that is similar (or identical) to what has been described with reference to the active surfaces 34 (with regard to Fig. 5).

In addition to diffusor 34, apparatus 10 may comprise baffles (not shown) further redirecting and diffusing the electromagnetic radiation diffused by diffusor 34. The baffles may also be coated with barium sulfate.

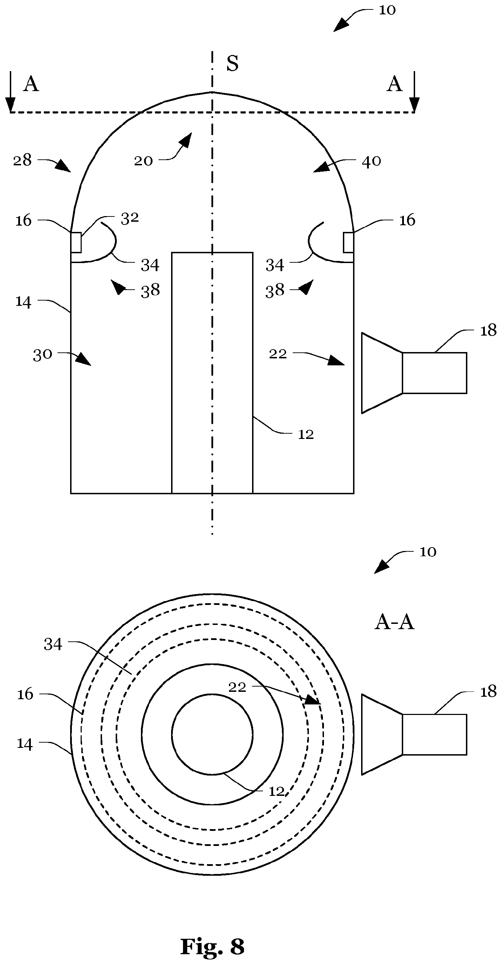

Fig. 8 illustrates another possible modification of apparatus 10 shown in Fig. 1 to Fig. 7 in which dome portion 28 encloses hemispherical portion 40. Accordingly, the shape of the interior of enclosure 14 can be divided in cylindrical portion 30 and hemispherical portion 40. Again, the whole shape of the space enclosed by enclosure 14 (i.e., cylindrical portion 30 and/or hemispherical portion 40) may be radially symmetric to symmetry axis S.

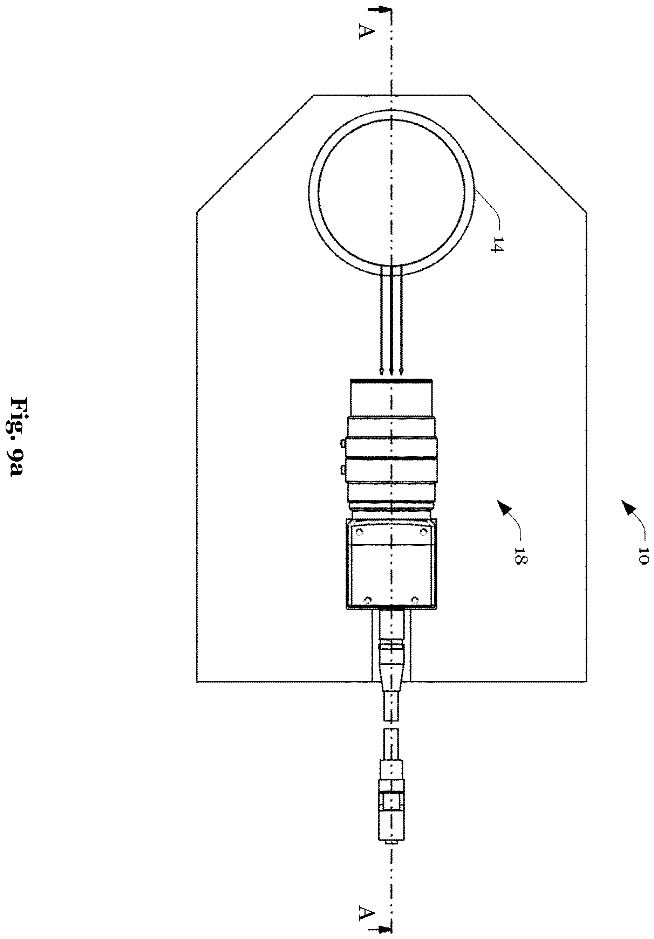

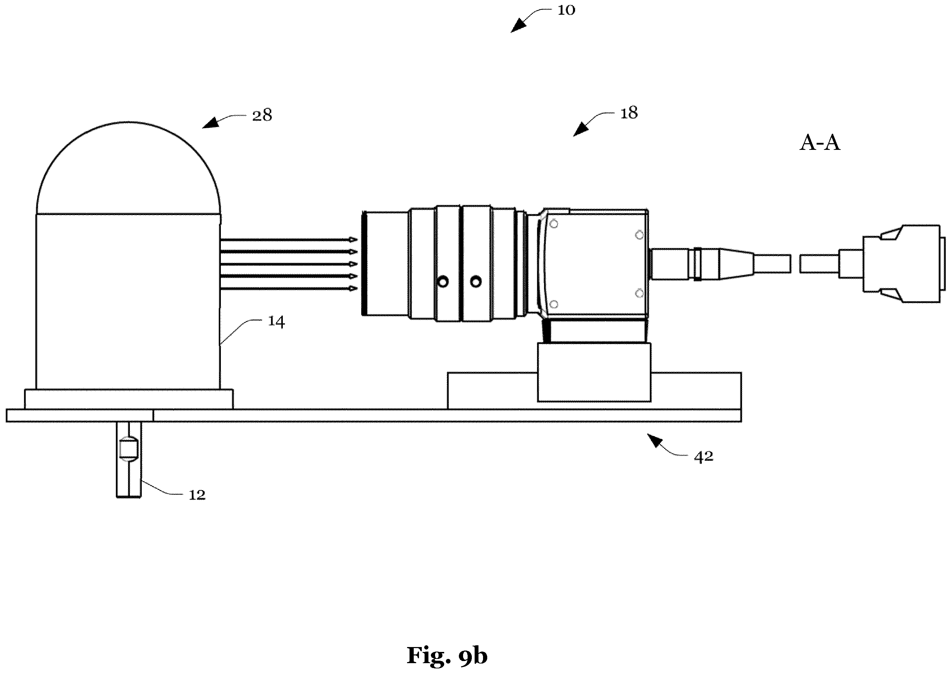

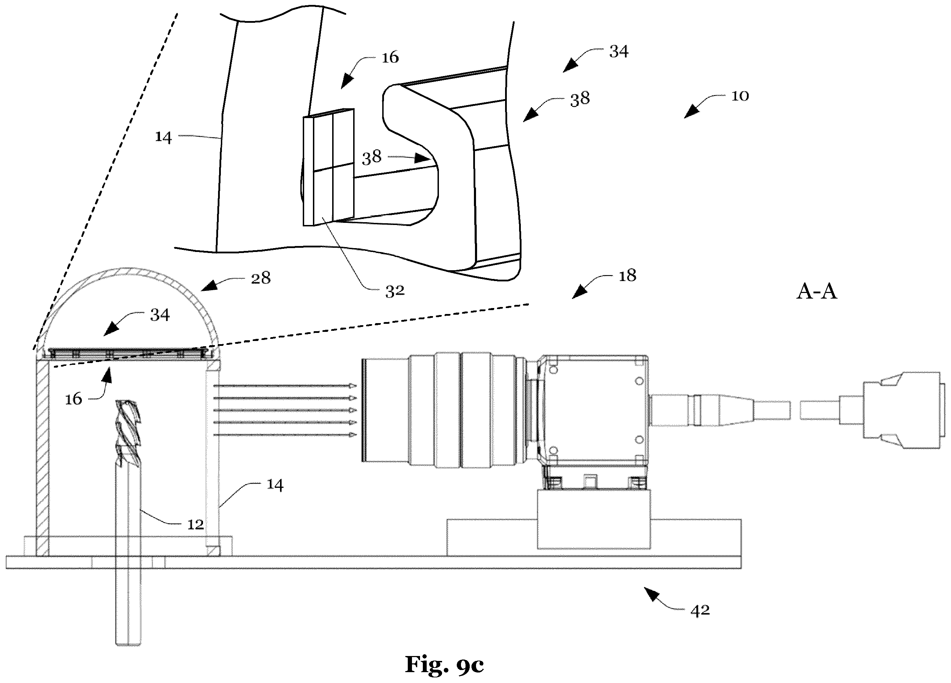

Fig. 9a, Fig. 9b, and Fig. 9c show an exemplary embodiment of apparatus 10 as schematically illustrated in Fig. 8. In the exemplary embodiment shown in Fig. 9a, Fig. 9b and Fig. 9c, sensor 18 is arranged within a camera that is slidably mounted on a frame 42. This allows for manually adjusting a distance between sensor 18 and object 12. In addition, the camera comprises a lens arrangement which allows for adjusting the focus of the camera.

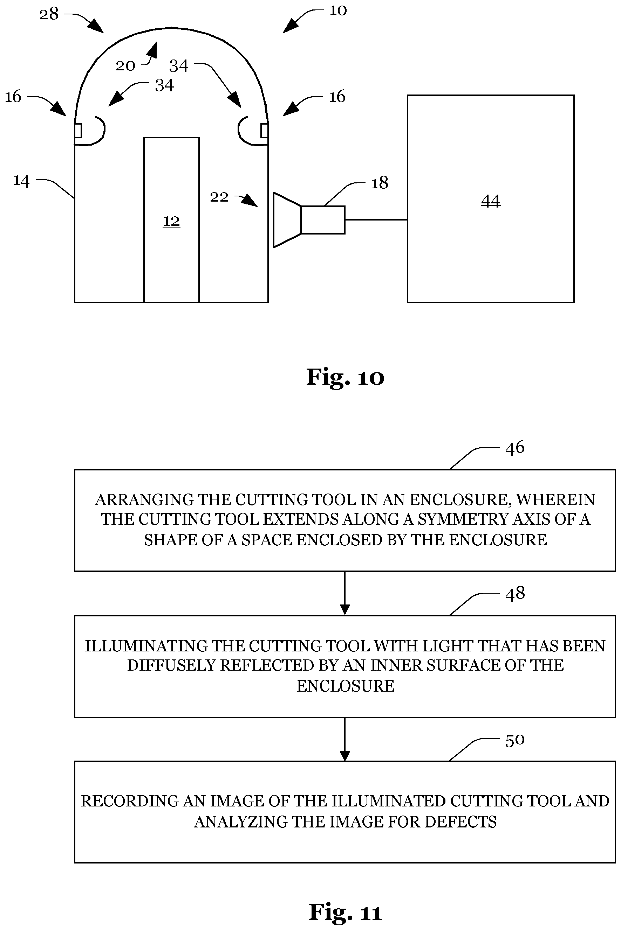

As schematically illustrated in Fig. 10, the camera can be connected to computer 44. Computer 44 may perform image processing routines (as described above) and/or allow for visual inspection of the image through a monitor. Computer 44 may also control sensor 18 (by controlling the camera) and any actuators (such as actuator 24) if the apparatus 10 is provided therewith. Computer 44 may also perform a preprogrammed inspection routine in which multiple images of object 12 are taken from different perspectives and/or at different focus settings. In addition, computer 44 may stitch the images together. The stitched-together images maybe used to calculate a three-dimensional model of object 12.

Fig. 11 shows a flow-chart of a method of illuminating a cutting tool which is to be inspected. When implementing the method, it may be made use of apparatus 10 described above (with object 12 being the cutting tool and the electromagnetic radiation being electromagnetic radiation having wavelengths in the visible spectrum). The method starts at step 46 with arranging the cutting tool in enclosure 14 such that the cutting tool extends along symmetry axis S. The method is continued at step 48 with illuminating the cutting tool with light that has been diffusely reflected by the inner surface of enclosure 14. At step, 50, the method may be concluded by recording an image of the illuminated cutting tool and analyzing the image for defects. As shown in Fig. 7, Fig. 8, Fig. 9c, and Fig. 10, direct illumination of the cutting tool by emitter 16 may be blocked by ring-shaped diffusor 34 to avoid or reduce specular reflection. Specifically, emitter 16 may comprise multiple light emitting diodes arranged along, and facing, ring-shaped diffusor 34 which diffusely reflect the light onto inner surface region 20.

### REFERENCE SIGNS LIST

- 10: apparatus
- 12: object
- 14: enclosure
- 16: emitter
- 18: sensor
- 20: surface region
- 22: active region
- 24: actuator
- 26: truncated conical portion
- 28: dome portion
- 30: cylindrical portion
- 32: active surface
- 34: diffusor
- 36: concave portion
- 38: U-shaped portion
- 40: hemispherical portion
- 42: frame
- 44: computer
- 46: step
- 48: step
- 50: step
- H: rotational axis
- P1: plane
- P2: plane
- S: symmetry axis
- W: rotational axis

## Claims

1. An apparatus (10) for illuminating an object (12), comprising:
an enclosure (14) which is configured to accommodate the object (12), the enclosure (14) comprising a dome portion (28) and enclosing a space which comprises a cylindrical portion (30), a truncated conical portion (26), and/or a hemispherical portion (40), or is radially symmetric;
an emitter (16) which is contained within the enclosure (14) and configured to emit electromagnetic radiation, wherein the emitter (16) comprises multiple inwardly facing active surfaces (32) arranged along a ring; and
a diffusor (34), the diffusor (34) having a concave portion (36) facing the dome portion (28), the concave portion (36) diffusing electromagnetic radiation incident upon the concave portion (36) towards an inner surface region (20) of the enclosure (14), the inner surface region (20) being configured to diffuse the electromagnetic radiation onto the object (12);
**characterized in that**
the diffusor (34) is a ring-shaped radially symmetric diffusor (34), wherein a cross-section of the ring-shaped radially symmetric diffusor (34) through an axis (S) of radial symmetry has two U-shaped portions (38) which are mirror symmetric to said axis (S).

2. The apparatus (10) for illuminating an object (12) of claim 1, further comprising a sensor (18) which is configured to detect electromagnetic radiation incident upon an active region (22) of the sensor (18), wherein the active region (22) is arranged such as to face the object (12) and to be exposed to electromagnetic radiation reflected by a surface of the object (12).

3. The apparatus (10) for illuminating an object (12) of claim 2, wherein the sensor (18) is arranged within a camera that is slidably mounted on a frame (42).

4. The apparatus (10) for illuminating an object (12) of any one of claims 1 to 3, wherein a gap between a leg of the radially symmetric diffusor (34) and the dome portion (28) is provided with a structure having openings that form a pattern to provide for structured lighting.

5. The apparatus (10) for illuminating an object (12) of any one of claims 1 to 4, further comprising baffles which further redirect and diffuse the electromagnetic radiation diffused by the radially symmetric diffusor (34).

6. The apparatus (10) for illuminating an object (12) of any one of claims 1 to 5, wherein the active surfaces (32) are mounted to the inner surface of enclosure (14) within the immediate vicinity of a plane (P1) at which the cylindrical portion (26) and the dome portion (28) meet.

7. The apparatus (10) for illuminating an object (12) of any one of claims 1 to 5, wherein the active surfaces (32) are not only horizontally distributed around the axis (S) but also vertically distributed on the inner surface of enclosure (14).

8. The apparatus (10) for illuminating an object (12) of any one of claims 1 to 7, wherein the apparatus (10) comprises an actuator (24) which is configured to cause a relative motion between the object (12) and the enclosure (14).

9. The apparatus (10) for illuminating an object (12) of claim 8, wherein the relative motion is a rotational motion.

10. A method of illuminating an object (12) which is to be inspected, comprising:
arranging (46) the object (12) in an enclosure (14) comprising a dome portion (28) and enclosing a space which comprises a cylindrical portion (30), a truncated conical portion (26), and/or a hemispherical portion (40), or is radially symmetric, wherein the object extends along a symmetry axis (S) of a shape of the space enclosed by the enclosure (14);
illuminating (48) the object (12) with light that has been diffusely reflected by an inner surface of the enclosure (14); and
recording (50) an image of the illuminated object (12);
emitting the light onto an outwardly facing concave portion (36) of a diffusor (34) which diffusely reflects the light onto the inner surface, wherein the diffusor (34) blocks direct illumination of the object (12) by a light source which emits the light;
**characterized in that**
the diffusor (34) is a ring-shaped radially symmetric diffusor (34), wherein a cross-section of the ring-shaped radially symmetric diffusor (34) through an axis (S) of radial symmetry has two U-shaped portions (38) which are mirror symmetric to said axis (S);
the light source comprises multiple light emitting diodes arranged along, and facing, the ring-shaped diffusor (34), wherein the light emitting diodes are configured to emit light of the same wavelength or different wavelengths; and
the method further comprises analyzing the image for defects.

11. The method of illuminating an object (12) which is to be inspected of claim 10, wherein the inner surface of the enclosure (14) is coated with barium sulfate.

## Patentansprüche

1. Einrichtung (10) zum Beleuchten eines Objekts (12), umfassend:
ein Gehäuse (14), das konfiguriert ist, um das Objekt (12) aufzunehmen, wobei das Gehäuse (14) einen Kuppelabschnitt (28) umfasst und einen Raum umschließt, der einen zylindrischen Abschnitt (30), einen kegelstumpfförmigen Abschnitt (26) und/oder einen halbkugelförmigen Abschnitt (40) umfasst oder radialsymmetrisch ist;
einen Emitter (16), der in dem Gehäuse (14) enthalten ist und konfiguriert ist, um elektromagnetische Strahlung zu emittieren, wobei der Emitter (16) mehrere nach innen weisende aktive Oberflächen (32) umfasst, die entlang eines Rings angeordnet sind; und
einen Diffusor (34), wobei der Diffusor (34) einen konkaven Abschnitt (36) aufweist, der zu dem Kuppelabschnitt (28) weist, wobei der konkave Abschnitt (36) auf den konkaven Abschnitt (36) einfallende elektromagnetische Strahlung in Richtung eines inneren Oberflächenbereichs (20) des Gehäuses (14) diffundiert, wobei der innere Oberflächenbereich (20) konfiguriert ist, um die elektromagnetische Strahlung auf das Objekt (12) zu diffundieren;
**dadurch gekennzeichnet, dass**
der Diffusor (34) ein ringförmiger radialsymmetrischer Diffusor (34) ist, wobei ein Querschnitt des ringförmigen radialsymmetrischen Diffusors (34) durch eine radialsymmetrische Achse (S) zwei U-förmige Abschnitte (38) aufweist, die spiegelsymmetrisch zu dieser Achse (S) sind.

2. Einrichtung (10) zum Beleuchten eines Objekts (12) nach Anspruch 1, die weiter einen Sensor (18) umfasst, der konfiguriert ist, um auf einen aktiven Bereich (22) des Sensors (18) einfallende elektromagnetische Strahlung zu erkennen, wobei der aktive Bereich (22) so angeordnet ist, dass er zum Objekt (12) weist und elektromagnetischer Strahlung ausgesetzt ist, die von einer Oberfläche des Objekts (12) reflektiert wird.

3. Einrichtung (10) zum Beleuchten eines Objekts (12) nach Anspruch 2, wobei der Sensor (18) in einer Kamera angeordnet ist, die verschiebbar auf einem Rahmen (42) montiert ist.

4. Einrichtung (10) zum Beleuchten eines Objekts (12) nach einem der Ansprüche 1 bis 3, wobei ein Spalt zwischen einem Schenkel des radialsymmetrischen Diffusors (34) und dem Kuppelabschnitt (28) mit einer Struktur bereitgestellt ist, die Öffnungen aufweist, die ein Muster bilden, um eine strukturierte Beleuchtung bereitzustellen.

5. Einrichtung (10) zum Beleuchten eines Objekts (12) nach einem der Ansprüche 1 bis 4, die weiter Blenden umfasst, die die vom radialsymmetrischen Diffusor (34) diffundierte elektromagnetische Strahlung weiter umleiten und diffundieren.

6. Einrichtung (10) zum Beleuchten eines Objekts (12) nach einem der Ansprüche 1 bis 5, wobei die aktiven Oberflächen (32) an der inneren Oberfläche des Gehäuses (14) in unmittelbarer Nähe einer Ebene (P1) montiert sind, an der der zylindrische Abschnitt (26) und der Kuppelabschnitt (28) zusammentreffen.

7. Einrichtung (10) zum Beleuchten eines Objekts (12) nach einem der Ansprüche 1 bis 5, wobei die aktiven Oberflächen (32) nicht nur horizontal um die Achse (S) verteilt sind, sondern auch vertikal auf der inneren Oberfläche des Gehäuses (14) verteilt sind.

8. Einrichtung (10) zum Beleuchten eines Objekts (12) nach einem der Ansprüche 1 bis 7, wobei die Einrichtung (10) einen Aktuator (24) umfasst, der konfiguriert ist, um eine Relativbewegung zwischen dem Objekt (12) und dem Gehäuse (14) zu bewirken.

9. Einrichtung (10) zum Beleuchten eines Objekts (12) nach Anspruch 8, wobei die Relativbewegung eine Rotationsbewegung ist.

10. Verfahren zum Beleuchten eines zu untersuchenden Objekts (12), umfassend:
Anordnen (46) des Objekts (12) in einem Gehäuse (14), das einen Kuppelabschnitt (28) umfasst und einen Raum umschließt, der einen zylindrischen Abschnitt (30) und einen kegelstumpfförmigen Abschnitt (26) und/oder einen halbkugelförmigen Abschnitt (40) umfasst oder radialsymmetrisch ist, wobei sich das Objekt entlang einer Symmetrieachse (S) einer Form des vom Gehäuse (14) umschlossenen Raums erstreckt;
Beleuchten (48) des Objekts (12) mit Licht, das von einer inneren Oberfläche des Gehäuses (14) diffus reflektiert wird; und
Aufnehmen (50) eines Bildes des beleuchteten Objekts (12);
Emittieren des Lichts auf einen nach außen weisenden konkaven Abschnitt (36) eines Diffusors (34), der das Licht diffus auf die innere Oberfläche reflektiert, wobei der Diffusor (34) eine direkte Beleuchtung des Objekts (12) durch eine Lichtquelle, die das Licht emittiert, blockiert;
**dadurch gekennzeichnet, dass**
der Diffusor (34) ein ringförmiger radialsymmetrischer Diffusor (34) ist, wobei ein Querschnitt des ringförmigen radialsymmetrischen Diffusors (34) durch eine radialsymmetrische Achse (S) zwei U-förmige Abschnitte (38) aufweist, die spiegelsymmetrisch zu dieser Achse (S) sind;
die Lichtquelle mehrere Leuchtdioden umfasst, die entlang des ringförmigen Diffusors (34) angeordnet sind und zu diesem weisen, wobei die Leuchtdioden konfiguriert sind, um Licht der gleichen Wellenlänge oder unterschiedlicher Wellenlängen zu emittieren; und
das Verfahren weiter das Analysieren des Bildes auf Defekte umfasst.

11. Verfahren zum Beleuchten eines zu untersuchenden Objekts (12) nach Anspruch 10, wobei die innere Oberfläche des Gehäuses (14) mit Bariumsulfat beschichtet ist.

## Revendications

1. Appareil (10) pour éclairer un objet (12), comprenant :
une enceinte (14) qui est configurée pour accueillir l'objet (12), l'enceinte (14) comprenant une partie de dôme (28) et renfermant un espace qui comprend une partie cylindrique (30), une partie tronconique (26), et/ou une partie hémisphérique (40), ou est radialement symétrique ;
un émetteur (16) qui est contenu à l'intérieur de l'enceinte (14) et configuré pour émettre un rayonnement électromagnétique, dans lequel l'émetteur (16) comprend de multiples surfaces actives orientées vers l'intérieur (32) disposées le long d'un anneau ; et
un diffuseur (34), le diffuseur (34) présentant une partie concave (36) faisant face à la partie de dôme (28), la partie concave (36) diffusant un rayonnement électromagnétique incident sur la partie concave (36) vers une région de surface intérieure (20) de l'enceinte (14), la région de surface intérieure (20) étant configurée pour diffuser le rayonnement électromagnétique sur l'objet (12) ;
**caractérisé en ce que**
le diffuseur (34) est un diffuseur à symétrie radiale en forme d'anneau (34), dans lequel une section transversale du diffuseur à symétrie radiale en forme d'anneau (34) passant par un axe (S) de symétrie radiale présente deux parties en forme de U (38) qui sont symétriques en miroir par rapport audit axe (S).

2. Appareil (10) pour éclairer un objet (12) selon la revendication 1, comprenant en outre un capteur (18) qui est configuré pour détecter un rayonnement électromagnétique incident sur une région active (22) du capteur (18), dans lequel la région active (22) est agencée de manière à faire face à l'objet (12) et à être exposée au rayonnement électromagnétique réfléchi par une surface de l'objet (12).

3. Appareil (10) pour éclairer un objet (12) selon la revendication 2, dans lequel le capteur (18) est agencé à l'intérieur d'une caméra qui est montée de manière coulissante sur un cadre (42).

4. Appareil (10) pour éclairer un objet (12) selon l'une quelconque des revendications 1 à 3, dans lequel un espace entre une branche du diffuseur radialement symétrique (34) et la partie de dôme (28) est pourvu d'une structure présentant des ouvertures qui forment un motif pour fournir un éclairage structuré.

5. Appareil (10) pour éclairer un objet (12) selon l'une quelconque des revendications 1 à 4, comprenant en outre des déflecteurs qui redirigent et diffusent en outre le rayonnement électromagnétique diffusé par le diffuseur radialement symétrique (34).

6. Appareil (10) pour éclairer un objet (12) selon l'une quelconque des revendications 1 à 5, dans lequel les surfaces actives (32) sont montées sur la surface intérieure de l'enceinte (14) à proximité immédiate d'un plan (P1) au niveau duquel la partie cylindrique (26) et la partie de dôme (28) se rencontrent.

7. Appareil (10) pour éclairer un objet (12) selon l'une quelconque des revendications 1 à 5, dans lequel les surfaces actives (32) sont non seulement réparties horizontalement autour de l'axe (S) mais également réparties verticalement sur la surface intérieure de l'enceinte (14).

8. Appareil (10) pour éclairer un objet (12) selon l'une quelconque des revendications 1 à 7, dans lequel l'appareil (10) comprend un actionneur (24) qui est configuré pour provoquer un mouvement relatif entre l'objet (12) et l'enceinte (14).

9. Appareil (10) pour éclairer un objet (12) selon la revendication 8, dans lequel le mouvement relatif est un mouvement de rotation.

10. Procédé d'éclairage d'un objet (12) qui doit être inspecté, comprenant les étapes consistant à :
agencer (46) l'objet (12) dans une enceinte (14) comprenant une partie de dôme (28) et renfermant un espace qui comprend une partie cylindrique (30), une partie tronconique (26), et/ou une partie hémisphérique (40), ou est radialement symétrique, dans lequel l'objet s'étend le long d'un axe de symétrie (S) d'une forme de l'espace entouré par l'enceinte (14) ;
éclairer (48) l'objet (12) avec une lumière qui a été réfléchie de manière diffuse par une surface intérieure de l'enceinte (14) ; et
enregistrer (50) une image de l'objet éclairé (12) ;
émettre la lumière jusque sur une partie concave orientée vers l'extérieur (36) d'un diffuseur (34) qui réfléchit de manière diffuse la lumière jusque sur la surface intérieure, dans lequel le diffuseur (34) bloque un éclairage direct de l'objet (12) par une source de lumière qui émet la lumière ;
**caractérisé en ce que**
le diffuseur (34) est un diffuseur à symétrie radiale en forme d'anneau (34), dans lequel une section transversale du diffuseur à symétrie radiale en forme d'anneau (34) passant par un axe (S) de symétrie radiale présente deux parties en forme de U (38) qui sont symétriques en miroir par rapport audit axe (S) ;
la source de lumière comprend de multiples diodes électroluminescentes agencées le long du diffuseur en forme d'anneau (34) et en face de celui-ci, dans lequel les diodes électroluminescentes sont configurées pour émettre une lumière de la même longueur d'onde ou de longueurs d'onde différentes ; et
le procédé comprend en outre une analyse de l'image concernant des défauts.

11. Procédé d'éclairage d'un objet (12) qui doit être inspecté selon la revendication 10, dans lequel la surface intérieure de l'enceinte (14) est revêtue de sulfate de baryum.
